# EUROPEAN PATENT SPECIFICATION

(11) **EP 3 211 832 B1**
(45) Date of publication and mention of the grant of the patent: **20.03.2019**
(21) Application number: 14894164.4
(22) Date of filing: 24.11.2014
(51) Int. Cl.: H04L 12/26, H04L 12/703, H04L 12/24

(54) **FAULT DETECTION METHOD AND DEVICE**
FEHLERDETEKTIONSVERFAHREN UND -VORRICHTUNG
PROCÉDÉ ET DISPOSITIF DE DÉTECTION DE DÉFAUT

(30) Priority: 21.10.2014 CN 201410564306
(43) Date of publication of application: 30.08.2017
(73) Proprietor: ZTE Corporation, Shenzhen, Guangdong 518057 (CN)
(72) Inventor: MENG, Wei, Shenzhen, Guangdong 518057 (CN); WANG, Cui, Shenzhen, Guangdong 518057 (CN)
(74) Representative: Novagraaf Technologies
(86) International application number: PCT/CN2014/092067
(87) International publication number: WO 2015/184739

(56) References cited:
- CN-A- 101 425 942
- CN-A- 101 771 577
- US-A1- 2007 180 105
- US-B1- 7 860 981
- US-B1- 7 860 981
- US-B2- 8 082 340
- KATZ D WARD JUNIPER NETWORKS D: "Bidirectional Forwarding Detection (BFD); rfc5880.txt", BIDIRECTIONAL FORWARDING DETECTION (BFD); RFC5880.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 June 2010 (2010-06-01), pages 1-49, XP015070820, [retrieved on 2010-06-01]

## Description

### Technical Field

The disclosure relates to the field of communications, and in particular to a method and device for fault detection.

### Background

Service Function Chaining (SFC) is a network technology which is currently studied and standardized. Since a data center network develops to an overlay network, a network edge has become a demarcation point between a virtual network and a physical network. The network edge may be a server or a ToR switch or a gateway. However, Overlay technology cannot solve all the problems. There are many middlewares in a data center, such as, a firewall or load balancer. These devices are processed based on user services. It is obviously infeasible if these devices are traversed through a tunnel.

This deployment model in the data center requires that a virtual firewall or load balancer can be arbitrarily deployed in a network, that is, regardless of a network topology; a drawback of the deployment model is that if traffic can be flexibly processed through a virtual firewall or load balancer, a new middleware such a virtual firewall or load balancer will be generated. These virtual firewalls or load balancers are deployed in an edge of a network and can be achieved by a standard server.

In the related art, a service processing function such as a virtual firewall, load balancer or gateway is referred to as a service function, and after being processed through a series of service functions, the traffic will form the SFC.

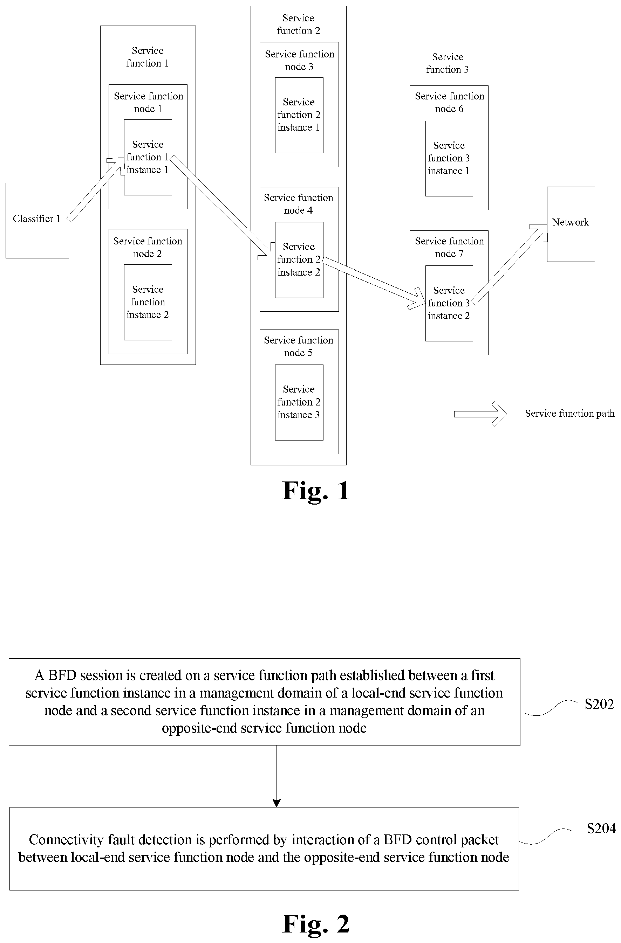

At present, an SFC framework in the relevant art can be classified into the following components:
1. Service Overlay, which is the Overlay technology that each network edge node needs to communicate;
2. Generic Service Control Plane (GSCP), which is a controller forming the SFC;
3. Service Classification, in which the flow identification is required, and then, a specific SFC processing is performed on a specific stream;
4. Dataplane Metadata, which is a major feature of the SFC framework, in which metadata allows each edge service processing node to exchange information with each other, so as to achieve specific service processing purposes;
5. Service Function Path (SFP), in which Fig. 1 is a schematic diagram of a service function path according to the related art; as shown in Fig. 1, the SFP starts from a classifier, and then passes through a number of service function instances, and ultimately reach a service processing path of destination;
6. Service Function Forwarder (SFF) in which data packets are transmitted between nodes of the SFC and encapsulate a layer of service function packet Network Service Header (NSH) outside a data frame. This NSH is parsed, encapsulated, and decapsulated by an SFF component on a service function node.

In summary, the SFC is a technology of separating network device service functions and forwarding, which implements an independent operation and processing of service functions and enhances a forwarding performance of a network device.

In order to protect critical applications, a certain number of redundant backup links may be designed in a network. When the network fails, a network device is required to quickly detect a fault and switch traffic to at least one backup link to speed up a network convergence speed. At present, some links achieve rapid fault detection through a hardware detection mechanism. However, some links (eg, Ethernet links) do not have such a detection mechanism. At this point, applications will rely on a mechanism of a upper layer protocol to perform a fault detection. A detection time of the upper layer protocol is more than 1 second, and such fault detection time is intolerable for some applications. Although some routing protocols such as Open Shortest Path First (OSPF), Link State Routing Protocol (ISIS) have a Fast Hello function to speed up a detection speed, the fault detection time can only reach an accuracy of 1 second, and the Fast Hello function is only for this protocol and cannot provide fast fault detection for other protocols.

A Bidirectional Forwarding Detection (BFD) protocol is generated in this context, which provides a common, standardized, media-independent, and protocol-independent fast fault detection mechanism. The BFD establishes a session on two network devices to detect a bidirectional forwarding path between these two network devices and provides services for upper layer applications. The BFD does not have a neighbor discovery mechanism, but relies on served upper layer applications to inform neighbor information of the BFD to establish a session. After the session is established, BFD packets will be sent periodically. If the BFD packets are not received within the detection time, the bidirectional forwarding path is considered to fail and the served upper layer applications are informed of performing a corresponding processing.

However, there is a lack of a fault detection mechanism based on the BFD connectivity between various service function instances in the SFC in a existing SFC technology.

Document 'Bidirectional Forwarding Detection (BFD)' from D. Kartz and D. Ward (XP015070820) discloses a protocol intended to detect faults in the bidirectional path between two forwarding engines, including interfaces, data link(s), and to the extent possible the forwarding engines themselves, with potentially very low latency. Document US 2007/0180105 discloses a technique for distinguishing between link and node failure using bidirectional forwarding detection. Document US 7,860,981 B1 discloses systems and methods for keeping active an Internet Protocol (IP) session using BFD protocols. However, the above mentioned problem still remains unsolved.

### Summary

The present invention provides a method according to claim 1 and a device according to claim 6 for fault detection to solve a problem that there is a lack of a fault detection mechanism based on a BFD connectivity between various service function instances in an SFC in the related art.

In an embodiment of the disclosure, a method for fault detection is provided, which includes that: creating a Bidirectional Forwarding Detection (BFD) session on a service function path established between a first service function instance in a management domain of a local-end service function node and a second service function instance in a management domain of an opposite-end service function node; and performing connectivity fault detection by interaction of a BFD control packet between the local-end service function node and the opposite-end service function node.

In an example embodiment, performing connectivity fault detection by the interaction of the BFD control packet includes: receiving the BFD control packet from the opposite-end service function node within a preset time period specified by a timer, wherein the BFD control packet carries an identification number of the first service function instance; and keeping the BFD session in an open state and resetting the timer in the case of determining, according to the identification number, that the first service function instance corresponding to the identification number in the management domain of the local-end service function node is in an active state.

In an example embodiment, before determining, according to the identification number, that the first service function instance is in the active state, the method further includes: acquiring that a local current session state filled into a status field of a BFD in the BFD control packet is in the open state currently from the BFD control packet.

In an example embodiment, performing connectivity fault detection by the interaction of the BFD control packet includes: waiting for the BFD control packet sent by the opposite-end service function node within a preset time period specified by a timer; and closing the BFD session and performing a service function path switching operation when the BFD control packet is not received within the preset time period, and informing the opposite-end service function node that a link fault occurs.

In an example embodiment, performing connectivity fault detection by the interaction of the BFD control packet includes: closing the BFD session and configuring the BFD control packet in the case of determining that the first service function instance in the management domain of local-end service function node has failed or has been closed, wherein a local current session state filled into a status field of a BFD in the BFD control packet is set to be in a closed state and an identification number of the second service function instance is encapsulated in the BFD control packet; and sending the BFD control packet to the opposite-end service function node.

In an example embodiment, creating the BFD session includes: adding a BFD function module in the management domain of the local-end service function node; and informing, by the local-end service function node where the first service function instance is located, the BFD function module of BFD session creation information, wherein the BFD session creation information is used for creating, by the BFD function module, the BFD session, and the BFD session creation information includes at least one of an identification number of the first service function instance, an identification number of the second service function instance, identification information of the local-end service function node, and identification information of the opposite-end service function node.

In another embodiment of the disclosure, a device for fault detection is provided, which includes that: an establishing component arranged to create a Bidirectional Forwarding Detection (BFD) session on a service function path established between a first service function instance in a management domain of a local-end service function node and a second service function instance in a management domain of an opposite-end service function node; and a detecting component arranged to perform connectivity fault detection by interaction of a BFD control packet between the local-end service function node and the opposite-end service function node.

In an example embodiment, the detecting component includes: a receiving element arranged to receive the BFD control packet from the opposite-end service function node within a preset time period specified by a timer, wherein the BFD control packet carries an identification number of the first service function instance; and a first executing element arranged to keep the BFD session in an open state and reset the timer in the case of determining, according to the identification number, that the first service function instance corresponding to the identification number in the management domain of the local-end service function node is in an active state.

In an example embodiment, the detecting component further includes: an acquiring element arranged to acquire that a local current session state filled into a status field of a BFD in the BFD control packet is in the open state currently from the BFD control packet.

In an example embodiment, the detecting component includes: a processing element arranged to wait for the BFD control packet sent by the opposite-end service function node within a preset time period specified by a timer; and a second executing element arranged to close the BFD session and perform a service function path switching operation when the BFD control packet is not received within the preset time period, and inform the opposite-end service function node that a link fault occurs.

In an example embodiment, the detecting component includes: a configuring element arranged to close the BFD session and configure the BFD control packet in the case of determining that the first service function instance in the management domain of local-end service function node has failed or has been closed, wherein a local current session state filled into a status field of a BFD in the BFD control packet is set to be in a closed state and an identification number of the second service function instance is encapsulated in the BFD control packet; and a sending element arranged to send the BFD control packet to the opposite-end service function node.

In an example embodiment, the establishing component includes: an adding element arranged to add a BFD function module in the management domain of the local-end service function node; and an informing element arranged to inform, by the local-end service function node where the first service function instance is located, the BFD function module of BFD session creation information, wherein the BFD session creation information is used for creating, by the BFD function module, the BFD session, and the BFD session creation information includes at least one of an identification number of the first service function instance, an identification number of the second service function instance, identification information of the local-end service function node, and identification information of the opposite-end service function node.

According to at least one embodiment of the disclosure, by creating the BFD session on the service function path established between the first service function instance in the management domain of the local-end service function node and the second service function instance in the management domain of the opposite-end service function node; and performing connectivity fault detection by the interaction of with the BFD control packet between the local-end service function node and the opposite-end service function node, the problem that there is a lack of the fault detection mechanism based on the BFD connectivity between various service function instances in the SFC in the related art is solved, so as to achieve performing connectivity detection between service function instances on a service function path.

### Brief Description of the Drawings

The drawings are described here to provide further understanding of the disclosure, and form a part of the present application. The schematic embodiments and description of the disclosure are adopted to explain the disclosure, and do not form improper limits to the disclosure. In the drawings:
Fig. 1 is a schematic diagram of a service function path according to the related art;
Fig. 2 is a flowchart of a method for fault detection according to an embodiment of the disclosure;
Fig. 3 is a schematic diagram of configuring an identification number of a service function instance in a BFD control packet according to an example embodiment of the disclosure;
Fig. 4 is a flowchart of a service function node in which a first service function instance is located as a receiving end of a BFD control packet according to an example embodiment of the disclosure;
Fig. 5 is a flowchart of a service function node in which a first service function instance is located as a sending end of a BFD control packet according to an example embodiment of the disclosure;
Fig. 6 is a schematic diagram of performing a connectivity detection based on a service function path of a service function instance 1 and a service function instance 2 according to a first example embodiment of the disclosure;
Fig. 7 is a schematic diagram of performing a connectivity detection based on a service function path of a service function instance 1 and a service function instance 2 according to a second example embodiment of the disclosure;
Fig. 8 is a structural block diagram of a device for fault detection according to an embodiment of the disclosure; and
Fig. 9 is a structural block diagram of a device for fault detection according to an example embodiment of the disclosure.

### Detailed Description

The disclosure is described below with reference to the drawings and the embodiments in detail. It needs to be noted that the embodiments in the present application and the characteristics in the embodiments may be combined with each other under the condition of no conflicts.

Fig. 2 is a flowchart of a method for fault detection according to an embodiment of the disclosure. As shown in Fig. 2, the method may include the following processing steps.

Step S202: A BFD session is created on a service function path established between a first service function instance in a management domain of a local-end service function node and a second service function instance in a management domain of an opposite-end service function node.

Step S204: Connectivity fault detection is performed by interaction of a BFD control packet between local-end service function node and the opposite-end service function node.

There is a lack of a fault detection mechanism based on a BFD connectivity between various service function instances in a SFC in the related art. The method as shown in Fig. 2 is used to create the BFD session on the service function path established between the first service function instance in the management domain of the local-end service function node and the second service function instance in the management domain of the opposite-end service function node; and execute connectivity fault detection by the interaction of the BFD control packet between local-end service function node and the opposite-end service function node, so as to solve the problem that there is the lack of the fault detection mechanism based on the BFD connectivity between various service function instances in the SFC in the related art, so as to achieve performing connectivity detection between service function instances on a service function path.

In an example embodiment, in Step S204, performing connectivity fault detection by the interaction of the BFD control packet may include the following operations:
Step S1: The BFD control packet is received from the opposite-end service function node within a preset time period specified by a timer, in which the BFD control packet carries an identification number of the first service function instance.
Step S2: The BFD session is kept in an open state and the timer is reset in the case that the local-end service function node determines, according to the identification number, that the first service function instance corresponding to the identification number in the management domain of the local-end service function node is in an active state.

In an example embodiment, in Step S2, before determining, according to the identification number, that the first service function instance is in the active state, the method further includes the following step.

Step S3: It is acquired that a status field of a BFD in the BFD control packet is in the open state currently from the BFD control packet. It is thus determined that the second service function instance on the second service function node does not have an abnormality or is closed. Therefore, the BFD session can be continuously kept in the case of determining at the same that the first service function instance in the management domain of the local-end service function node is also in the active state (that is, no abnormality occurs or it is not closed).

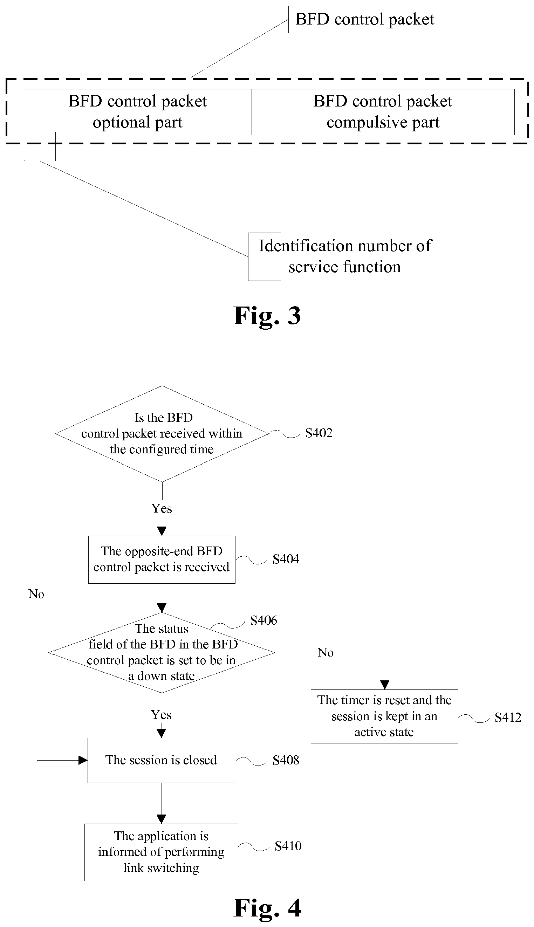

In an example embodiment, Fig. 3 is a schematic diagram of configuring an identification number of a service function instance in a BFD control packet according to an example embodiment of the disclosure. As shown in Fig. 3, after the session establishment and timer negotiation are completed for the BFD, each service function node will send the BFD control packet at a negotiated interval and add an identification number of a destination service function instance in an optional part of the BFD control packet. When each service function node receives the BFD control packet and the service function instance represented by the identification number of the destination service function instance in the BFD control packet is in the active state, a detection time timer will be reset and the session will be kept in the open state.

In an example embodiment, in Step S204, performing the connectivity fault detection by the interaction of the BFD control packet may include the following steps:
Step S4: The BFD control packet sent by the opposite-end service function node is waited for within a preset time period specified by a timer.
Step S5: The BFD session is closed and a service function path switching operation is performed when the BFD control packet is not received within the preset time period, and the opposite-end service function node is informed that a link fault occurs.

When the link fault occurs between the service function nodes, if each service function node does not receive the BFD control packet within the detection time, the BFD session will be moved to the closed state, and the relevant applications will be informed that the opposite end link fails so as to close the session and inform a managing component of taking measures such as SFP path switching.

Fig. 4 is a flowchart of a service function node in which a first service function instance is located as a receiving end of a BFD control packet according to an example embodiment of the disclosure. As shown in Fig. 4, the flow may include the following processing steps:
Step S402: The BFD control packet sent by the opposite-end service function node is waited for within the preset time period specified by the timer to determine whether the above BFD control packet is received within the preset time; if the above BFD control packet is received within the preset time, the flow proceeds to Step S404; if the above BFD control packet is not received within the preset time, the flow turns to Step S408.
Step S404: The BFD control packet sent by the opposite-end service function node is received within the preset time period specified by the timer.
Step S406: It is determined whether the status field of the BFD in the BFD control packet is set to be in a closed state and an identification number of the second service function instance is encapsulated in the BFD control packet; if the status field of the BFD in the BFD control packet is set to be in the closed state and the identification number of the second service function instance is encapsulated in the BFD control packet, the flow proceeds to Step S408; if the status field of the BFD in the BFD control packet is not set to be in a closed state or the identification number of the second service function instance is not encapsulated in the BFD control packet, the flow turns to Step S412.
Step S408: The BFD session is moved to the closed state and then the BFD session is closed.
Step S410: The managing component is informed of taking measures such as SFP path switching; and the flow ends.
Step S412: When the service function instance represented by the identification number of the destination service function instance in the BFD control packet is in the active state, the detection time timer will be reset and the session will be kept in an open state; and the flow ends.

In an example embodiment, in Step S204, performing the connectivity fault detection by interaction of the BFD control packet may include the following operations:
Step S6: The BFD session is closed and the BFD control packet is configured in the case of determining that the first service function instance in the management domain of local-end service function node has failed or has been closed, moreover a status field of a BFD in the BFD control packet is set to be in a closed state and an identification number of the second service function instance is encapsulated in the BFD control packet.
Step S7: The BFD control packet is sent to the opposite-end service function node.

When a service function instance of one of the service function nodes fails or is closed, the service function node closes the session. And when the BFD control packet is sent, a local current session state will be filled into the status field of the BFD, the status is set to be closed, the identification number of the destination service function instance is encapsulated, and is sent to the opposite-end service function node. After receiving the BFD control packet, the opposite-end service function node will close the session and inform the managing component of taking measures such as SFP path switching.

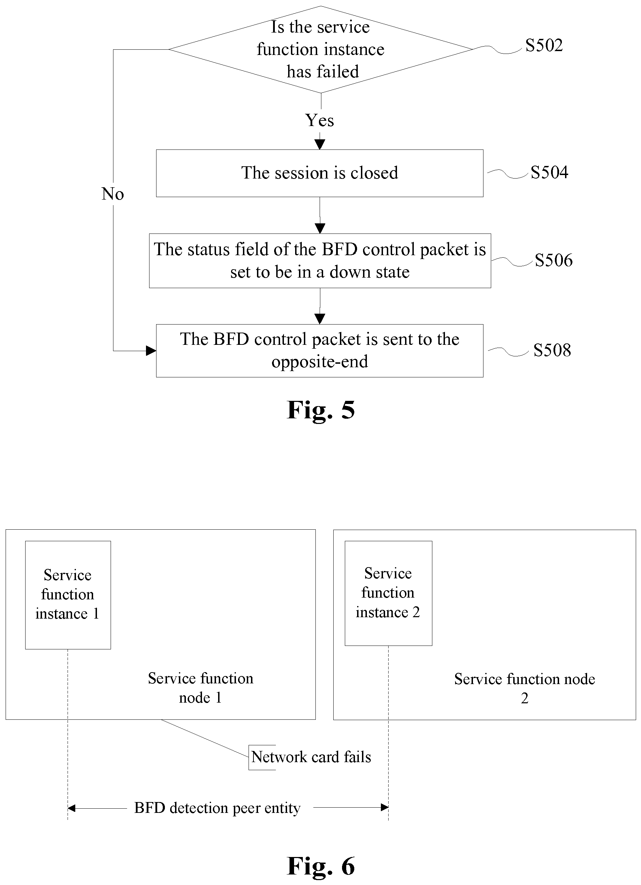

Fig. 5 is a flowchart of a service function node in which a first service function instance is located as a sending end of a BFD control packet according to an example embodiment of the disclosure. As shown in Fig. 5, the flow may include the following processing steps:
Step S502: It is determined whether the first service function instance inside the local-end service function node has failed or has been closed; if the first service function instance has failed or has been closed, the flow proceeds to Step S504; if the first service function instance is not failed and is not closed, the flow turns to Step S508.
Step S504: The BFD session is closed when it is determined that the first service function instance has failed or has been closed.
Step S506: The status field of the BFD in the BFD control packet is set to be in the closed state.
Step S508: The BFD control packet is sent to the opposite-end service function node; and the flow ends.

In an example, in Step S202, creating the BFD session may include the following steps.

Step S7: A BFD function component is added in the management domain of the local-end service function node.

Step S8: The local-end service function node where the first service function instance is located informs the BFD function component of BFD session creation information, moreover the BFD session creation information is used for creating, by the BFD function component, the BFD session, and the BFD session creation information may include, but is not limited to, at least one of:
(1) an identification number of the first service function instance;
(2) an identification number of the second service function instance;
(3) identification information of the local-end service function node; and
(4) identification information of the opposite-end service function node.

A peer entity is formed between two service function instances that require BFD detection, and the associated BFD protocol configuration and SFP and BFD linkage are bound. When a new SFP is established and the SFP contains the above two service function instances, the service function node where the service function instance is located can inform BFD of the information of two service function instances and service function paths.

The above information may include, but is not limited to, the identification number of the source service function instance, the identification number of the destination service function instance, the service function path, the Internet Protocol (IP) address of the source service function node, and the IP address of the destination service function node.

The IP address of the above source service function node is the IP address of the service function node where the above service function instance is located; the IP address of the above destination service function node is the IP address of the service function node where the opposite-end service function instance is located.

Further, the BFD establishes a session based on the received neighbor information. The session information may include, but is not limited to, the identification number of the source service function instance, the identification number of the destination service function instance, the IP address of the source service function node, and the IP address of the destination service function node.

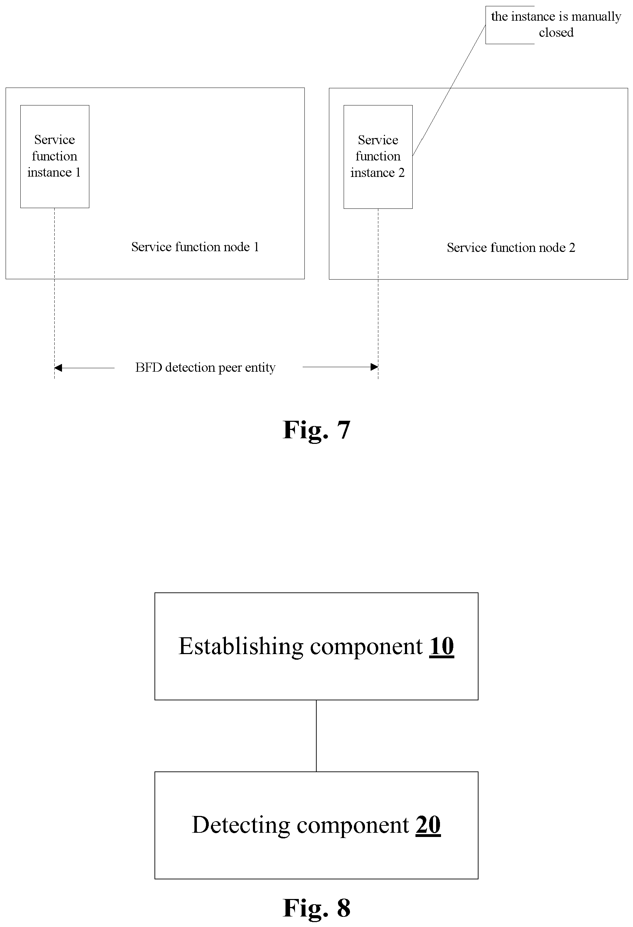

The example embodiments described above will be further described below with reference to the preferred embodiments shown in Figs. 6 and 7.

In general, the connectivity fault between service function instances is often caused by the following two reasons:
a first reason: a link between service function nodes fails, that is, a physical or virtual link between the service function nodes fails; and
a second reason: a service function instance fails or is closed, that is, a link between the service function nodes may be intact, but the service function instance cannot work properly due to a fact that the service function instance is closed initiatively by a user, the service function instance suspends, etc.

Fig. 6 is a schematic diagram of performing a connectivity detection based on a service function path of a service function instance 1 and a service function instance 2 according to a first example embodiment of the disclosure. As shown in Fig. 6, a detection mechanism based on the BFD connectivity is established between the service function instance 1 and the service function instance 2. After a period of stable operation, a node 1 damages network card, resulting in a link fault. Specifically, the following processing steps may be included.
Step 1: A BFD detection mechanism is configured and a linkage SFC is configured on a service function node 1 where the service function instance 1 is located and a service function node 2 where the service function instance 2 is located.
Step 2: After an SFP containing the service function instance 1 and the service function instance 2 is created, the service function instance 1 informs a BFD component of the service function node 1 of requiring a creation of a session. At the same time, the service function instance 2 informs the BFD component of the service function node 2 of also requiring a creation of a session.
Step 3: The BFD successfully creates a session based on the two service function instances. The identification number of the service function instance 1 is 1000, the identification number of the service function instance 2 is 2000, the IP address of the service function node 1 is 192.168.1.1, and the IP address of the service function node 2 is 192.178.1.1.
Step 4: The service function node 1 checks that the process of the service function instance 1 operates normally, sends the BFD control packet to the service function node 2 regularly and periodically and encapsulates the optional item in which the identification number of the service function instance 2 is 2000; the service function node 2 checks that the process of the service function instance 2 operates normally, sends the BFD control packet to the service function node 1 regularly and periodically and encapsulates the optional item in which the identification number of the service function instance 1 is 1000.
Step 5: The service function node 1 receives the BFD control packet sent by the other party in the configured time, determines that the service function instance with the identification number of 1000 operates normally, resets the timer and keeps the session in the active state; and the service function node 2 receives the BFD control packet sent by the other party in the configured time, determines that the service function instance with the identification number of 2000 operates normally, resets the timer and keeps the session in the active state.
Step 6: The service function node 1 has a link fault.
Step 7: The service function node 2 cannot receive the BFD control packet sent by the other party in the configured time. Therefore, the session is closed and the relevant application is informed of performing SFP path switching.

Fig. 7 is a schematic diagram of performing a connectivity detection based on a service function path of a service function instance 1 and a service function instance 2 according to a second example embodiment of the disclosure. As shown in Fig. 7, a detection mechanism based on the BFD connectivity is established between the service function instance 1 and the service function instance 2. After a period of stable operation, an operator manually closes the service function instance 2. Specifically, the following processing steps may be included.
Step 1: A BFD detection mechanism is configured and a linkage SFC is configured on a service function node 1 where the service function instance 1 is located and a service function node 2 where the service function instance 2 is located.
Step 2: After an SFP containing the service function instance 1 and the service function instance 2 is created, the service function instance 1 informs a BFD component of the service function node 1 of requiring a creation of a session. At the same time, the service function instance 2 informs the BFD component of the service function node 2 of also requiring a creation of a session.
Step 3: The BFD successfully creates a session based on the two service function instances. The identification number of the service function instance 1 is 1000, the identification number of the service function instance 2 is 2000, the IP address of the service function node 1 is 192.168.1.1, and the IP address of the service function node 2 is 192.178.1.1.
Step 4: The service function node 1 checks that the process of the service function instance 1 operates normally, sends the BFD control packet to the service function node 2 regularly and periodically and encapsulates the optional item in which the identification number of the service function instance 2 is 2000; the service function node 2 checks that the process of the service function instance 2 operates normally, sends the BFD control packet to the service function node 1 regularly and periodically and encapsulates the optional item in which the identification number of the service function instance 1 is 1000.
Step 5: The service function node 1 receives the BFD control packet sent by the other party in the configured time, determines that the service function instance with the identification number of 1000 operates normally, resets the timer and keeps the session in the active state; and the service function node 2 receives the BFD control packet sent by the other party in the configured time, determines that the service function instance with the identification number of 2000 operates normally, resets the timer and keeps the session in the active state.
Step 6: The operator manually closes the service function instance 2.
Step 7: The service function node 2 checks that the process of the service function instance 2 is closed, sets the status field of the BFD control packet to be down, sends the BFD control packet to the service function node 1, and closes the session at the same time.
Step 8: The service function node 1 cannot receive the BFD control packet sent by the other party in the configured time, but a value of the status field of the packet has been set to be closed.
Step 9: The service function node 1 closes the session and informs relevant applications of performing SFP path switching.

Fig. 8 is a structural block diagram of a device for fault detection according to an embodiment of the disclosure. As shown in Fig. 8, the fault detection device may include an establishing component 10 arranged to create a BFD session on a service function path established between a first service function instance in a management domain of a local-end service function node and a second service function instance in a management domain of an opposite-end service function node; and a detecting component 20 arranged to perform connectivity fault detection by interaction of a BFD control packet between the local-end service function node and the opposite-end service function node.

The device as shown in Fig. 8 is used to solve the problem that there is a lack of a fault detection mechanism based on the BFD connectivity between various service function instances in the SFC in the related art, so as to achieve performing connectivity detection between service function instances on a service function path.

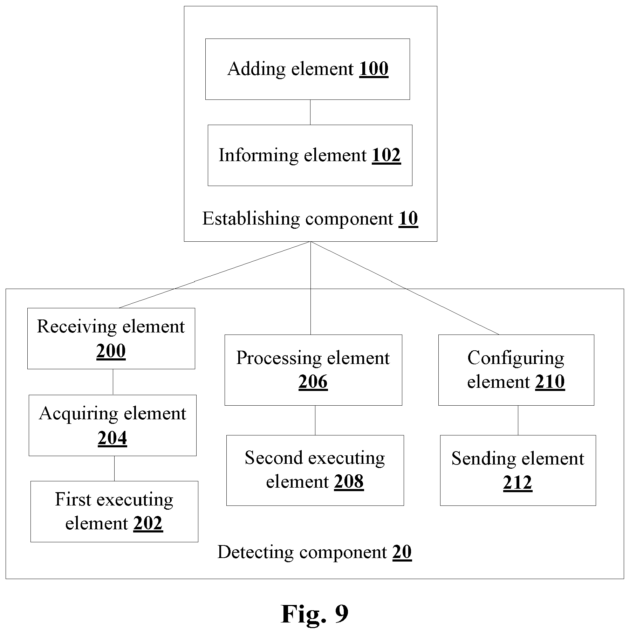

Preferably, as shown in Fig. 9, the detecting component 20 may include: a receiving element 200 arranged to receive the BFD control packet from the opposite-end service function node within a preset time period specified by a timer, wherein the BFD control packet carries an identification number of the first service function instance; and a first executing element 202 arranged to keep the BFD session in an open state and reset the timer in the case of determining, according to the identification number, that the first service function instance corresponding to the identification number in the management domain of the local-end service function node is in an active state.

In an example embodiment, as shown in Fig. 9, the detecting component 20 may include: an acquiring element 204 arranged to acquire that a status field of a BFD in the BFD control packet is in the open state currently from the BFD control packet.

In an example embodiment, as shown in Fig. 9, the detecting component 20 may include: a processing element 206 arranged to wait for the BFD control packet sent by the opposite-end service function node within a preset time period specified by a timer; and a second executing element 208 arranged to close the BFD session and perform a service function path switching operation when the BFD control packet is not received within the preset time period, and inform the opposite-end service function node that a link fault occurs.

In an example embodiment, as shown in Fig. 9, the detecting component 20 may include: a configuring element 210 arranged to close the BFD session and configure the BFD control packet in the case of determining that the first service function instance in the management domain of local-end service function node has failed or has been closed, moreover a status field of a BFD in the BFD control packet is set to be in a closed state and an identification number of the second service function instance is encapsulated in the BFD control packet; and a sending element 212 arranged to send the BFD control packet to the opposite-end service function node.

In an example embodiment, as shown in Fig. 9, the establishing component 10 may include: an adding element 100 arranged to add a BFD function component in the management domain of the local-end service function node; and an informing element 102 arranged to inform, by the local-end service function node where the first service function instance is located, the BFD function component of BFD session creation information, in which the BFD session creation information is used for creating, by the BFD function component, the BFD session, and the BFD session creation information includes at least one of an identification number of the first service function instance, an identification number of the second service function instance, identification information of the local-end service function node, and identification information of the opposite-end service function node.

From the above description, it can be seen that the above embodiments achieve the following technical effects (it should be noted that these effects are the effects achievable by certain preferred embodiments): the technical solution provided by the embodiments of the disclosure provides a manner of the SFC and BFD detection technology linkage so as to achieve performing fault detection between the service function nodes.

Obviously, those skilled in the art should know that each of the above components or steps of the disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, and, in some cases, the steps shown or described may be performed in a order different from the order herein, or the components or steps may form each integrated circuit component, or multiple components or steps therein may form a single integrated circuit component for implementation. As a consequence, the disclosure is not limited to any specific hardware and software combination.

The above are only example embodiments of the disclosure and not intended to limit the disclosure, and for the technician of the field, the disclosure may have various modifications and variations.

### Industrial Applicability

As described above, a method and device for fault detection provided according to at least one embodiment of the disclosure have the following advantageous effects: a Bidirectional Forwarding Detection (BFD) session is created on a service function path established between a first service function instance in a management domain of a local-end service function node and a second service function instance in a management domain of an opposite-end service function node; and connectivity fault detection is performed by interaction of a BFD control packet between local-end service function node and the opposite-end service function node so as to achieve performing connectivity detection between service function instances on a service function path.

## Claims

1. A method for fault detection, comprising:
creating a Bidirectional Forwarding Detection (BFD) session on a service function path established between a first service function instance in a management domain of a local-end service function node and a second service function instance in a management domain of an opposite-end service function node (S202); and
performing connectivity fault detection by interaction of a BFD control packet between the local-end service function node and the opposite-end service function node (S204);
**characterized in that** performing connectivity fault detection by the interaction of the BFD control packet (S204) comprises: receiving the BFD control packet from the opposite-end service function node within a preset time period specified by a timer, wherein the BFD control packet carries an identification number of the first service function instance; and keeping the BFD session in an open state and resetting the timer in the case of determining that the first service function instance corresponding to the identification number in the management domain of the local-end service function node is in an active state.

2. The method as claimed in claim 1, wherein before determining, that the first service function instance is in the active state, the method further comprises:
acquiring that a local current session state filled into a status field of a BFD in the BFD control packet is the open state currently from the BFD control packet.

3. The method as claimed in claim 1, wherein performing connectivity fault detection by the interaction of the BFD control packet (S204) comprises:
waiting for the BFD control packet sent by the opposite-end service function node within a preset time period specified by a timer; and
closing the BFD session and performing a service function path switching operation when the BFD control packet is not received within the preset time period, and informing the opposite-end service function node that a link fault occurs.

4. The method as claimed in claim 1, wherein performing connectivity fault detection by the interaction of the BFD control packet (S204) comprises:
closing the BFD session and configuring the BFD control packet in the case of determining that the first service function instance in the management domain of local-end service function node has failed or has been closed, wherein a local current session state filled into a status field of a BFD in the BFD control packet is set to be a closed state and an identification number of the second service function instance is encapsulated in the BFD control packet; and
sending the BFD control packet to the opposite-end service function node.

5. The method as claimed in claim 1, wherein creating the BFD session comprises:
adding a BFD function module in the management domain of the local-end service function node; and
informing, by the local-end service function node where the first service function instance is located, the BFD function module of BFD session creation information, wherein the BFD session creation information is used for creating, by the BFD function module, the BFD session, and the BFD session creation information comprises at least one of an identification number of the first service function instance, an identification number of the second service function instance, identification information of the local-end service function node, and identification information of the opposite-end service function node.

6. A fault detection device, comprising:
an establishing component (10) arranged to create a Bidirectional Forwarding Detection (BFD) session on a service function path established between a first service function instance in a management domain of a local-end service function node and a second service function instance in a management domain of an opposite-end service function node; and
a detecting component (20) arranged to perform connectivity fault detection by interaction of a BFD control packet between the local-end service function node and the opposite-end service function node;
**characterized in that** the detecting component comprises: a receiving element arranged to receive the BFD control packet from the opposite-end service function node within a preset time period specified by a timer, wherein the BFD control packet carries an identification number of the first service function instance; and a first executing element arranged to keep the BFD session in an open state and reset the timer in the case of determining that the first service function instance corresponding to the identification number in the management domain of the local-end service function node is in an active state.

7. The device as claimed in claim 6, wherein the detecting component (20) further comprises:
an acquiring element (204) arranged to acquire that a local current session state filled into a status field of a BFD in the BFD control packet is in the open state currently from the BFD control packet.

8. The device as claimed in claim 6, wherein the detecting component (20) comprises:
a processing element (206) arranged to wait for the BFD control packet sent by the opposite-end service function node within a preset time period specified by a timer; and
a second executing element (208) arranged to close the BFD session and perform a service function path switching operation when the BFD control packet is not received within the preset time period, and inform the opposite-end service function node that a link fault occurs.

9. The device as claimed in claim 6, wherein the detecting component (20) comprises:
a configuring element (210) arranged to close the BFD session and configure the BFD control packet in the case of determining that the first service function instance in the management domain of local-end service function node has failed or has been closed, wherein a local current session state filled into a status field of a BFD in the BFD control packet is set to be in a closed state and an identification number of the second service function instance is encapsulated in the BFD control packet; and
a sending element (212) arranged to send the BFD control packet to the opposite-end service function node.

10. The device as claimed in claim 6, wherein the establishing component (10) comprises:
an adding element (100) arranged to add a BFD function module in the management domain of the local-end service function node; and
an informing element (102) arranged to inform, by the local-end service function node where the first service function instance is located, the BFD function module of BFD session creation information, wherein the BFD session creation information is used for creating, by the BFD function module, the BFD session, and the BFD session creation information comprises at least one of an identification number of the first service function instance, an identification number of the second service function instance, identification information of the local-end service function node, and identification information of the opposite-end service function node.

## Patentansprüche

1. Verfahren zur Fehlererkennung, umfassend:
Aufbauen einer Bidirectional Forwarding Detection-(BFD) Sitzung auf einem Dienstfunktionspfad, der zwischen einer ersten Dienstfunktionsinstanz in einer Verwaltungsdomäne eines Dienstfunktionsknotens am lokalen Ende, und einer zweiten Dienstfunktionsinstanz in einer Verwaltungsdomäne eines Dienstfunktionsknotens am gegenüberliegenden Ende eingerichtet ist (S202); und
Durchführen von Konnektivitätsfehlererkennung durch Interaktion eines BFD-Steuerpakets zwischen dem Dienstfunktionsknoten am lokalen Ende und dem Dienstfunktionsknoten am gegenüberliegenden Ende (S204);
**dadurch gekennzeichnet, dass** das Durchführen von Konnektivitätsfehlererkennung durch die Interaktion des BFD-Steuerpakets (S204) umfasst: Empfangen des BFD-Steuerpakets vom Dienstfunktionsknoten am gegenüberliegenden Ende innerhalb eines voreingestellten Zeitraums, der von einem Timer spezifiziert wird, wobei das BFD-Steuerpaket eine Identifikationsnummer der ersten Dienstfunktionsinstanz übermittelt; und Halten der BFD-Sitzung in einem offenen Zustand und Zurücksetzen des Timers im Falle des Bestimmens, dass sich die erste Dienstfunktionsinstanz, die der Identifikationsnummer in der Verwaltungsdomäne des Dienstfunktionsknotens am lokalen Ende entspricht, in einem aktiven Zustand befindet.

2. Verfahren nach Anspruch 1, wobei vor dem Bestimmen, dass sich die erste Dienstfunktionsinstanz im aktiven Zustand befindet, das Verfahren weiter umfasst:
Erfassen, aus dem BFD-Steuerpaket, dass ein aktueller lokaler Sitzungszustand, der in ein Statusfeld einer BFD im BFD-Steuerpaket eingetragen ist, aktuell der offene Zustand ist.

3. Verfahren nach Anspruch 1, wobei das Durchführen von Konnektivitätsfehlererkennung durch die Interaktion des BFD-Steuerpakets (S204) umfasst:
Warten auf das BFD-Steuerpaket, das vom Dienstfunktionsknoten am gegenüberliegenden Ende gesendet wird, innerhalb eines voreingestellten Zeitraums, der von einem Timer spezifiziert wird; und
Schließen der BFD-Sitzung und Durchführen eines Dienstfunktionspfad-Umschaltvorgangs, wenn das BFD-Steuerpaket nicht innerhalb des voreingestellten Zeitraums empfangen wird, und Informieren des Dienstfunktionsknotens am gegenüberliegenden Ende darüber, dass ein Verbindungsfehler aufgetreten ist.

4. Verfahren nach Anspruch 1, wobei das Durchführen von Konnektivitätsfehlererkennung durch die Interaktion des BFD-Steuerpakets (S204) umfasst:
Schließen der BFD-Sitzung und Konfigurieren des BFD-Steuerpakets im Falle des Bestimmens, dass die erste Dienstfunktionsinstanz in der Verwaltungsdomäne des Dienstfunktionsknotens am lokalen Ende ausgefallen ist oder geschlossen wurde, wobei ein aktueller lokaler Sitzungszustand, der in ein Statusfeld einer BFD im BFD-Steuerpaket eingetragen wird, auf einen geschlossenen Zustand eingestellt wird und eine Identifikationsnummer der zweiten Dienstfunktionsinstanz im BFD-Steuerpaket gekapselt wird; und
Senden des BFD-Steuerpakets an den Dienstfunktionsknoten am gegenüberliegenden Ende.

5. Verfahren nach Anspruch 1, wobei das Aufbauen der BFD-Sitzung umfasst:
Hinzufügen eines BFD-Funktionsmoduls in der Verwaltungsdomäne des Dienstfunktionsknotens am lokalen Ende; und
Informieren, durch den Dienstfunktionsknoten am lokalen Ende, an dem die erste Dienstfunktionsinstanz angesiedelt ist, des BFD-Funktionsmoduls über BFD-Sitzungsaufbauinformationen, wobei die BFD-Sitzungsaufbauinformationen zum Aufbauen der BFD-Sitzung durch das BFD-Funktionsmodul verwendet werden, und die BFD-Sitzungsaufbauinformationen mindestens eines umfassen aus einer Identifikationsnummer der ersten Dienstfunktionsinstanz, einer Identifikationsnummer der zweiten Dienstfunktionsinstanz, Identifikationsinformationen des Dienstfunktionsknotens am lokalen Ende, und Identifikationsinformationen des Dienstfunktionsknotens am gegenüberliegenden Ende.

6. Fehlererkennungsvorrichtung, umfassend:
eine Einrichtungskomponente (10), die dazu ausgebildet ist, eine Bidirectional Forwarding Detection- (BFD) Sitzung auf einem Dienstfunktionspfad aufzubauen, der zwischen einer ersten Dienstfunktionsinstanz in einer Verwaltungsdomäne eines Dienstfunktionsknotens am lokalen Ende, und einer zweiten Dienstfunktionsinstanz in einer Verwaltungsdomäne eines Dienstfunktionsknotens am gegenüberliegenden Ende eingerichtet ist; und
eine Erkennungskomponente (20), die dazu ausgebildet ist, Konnektivitätsfehlererkennung durch Interaktion eines BFD-Steuerpakets zwischen dem Dienstfunktionsknoten am lokalen Ende und dem Dienstfunktionsknoten am gegenüberliegenden Ende durchzuführen;
**dadurch gekennzeichnet, dass** die Erkennungskomponente umfasst: ein Empfangselement, das dazu ausgebildet ist, das BFD-Steuerpaket vom Dienstfunktionsknoten am gegenüberliegenden Ende innerhalb eines voreingestellten Zeitraums zu empfangen, der von einem Timer spezifiziert wird, wobei das BFD-Steuerpaket eine Identifikationsnummer der ersten Dienstfunktionsinstanz übermittelt; und ein erstes Ausführungselement, das dazu ausgebildet ist, die BFD-Sitzung in einem offenen Zustand zu halten und den Timer zurückzusetzen im Falle des Bestimmens, dass sich die erste Dienstfunktionsinstanz, die der Identifikationsnummer in der Verwaltungsdomäne des Dienstfunktionsknotens am lokalen Ende entspricht, in einem aktiven Zustand befindet.

7. Vorrichtung nach Anspruch 6, wobei die Erkennungskomponente (20) weiter umfasst:
ein Erfassungselement (204), das dazu ausgebildet ist, aus dem BFD-Steuerpaket zu erfassen, dass ein aktueller lokaler Sitzungszustand, der in ein Statusfeld einer BFD im BFD-Steuerpaket eingetragen ist, sich aktuell im offenen Zustand befindet.

8. Vorrichtung nach Anspruch 6, wobei die Erkennungskomponente (20) umfasst:
ein Verarbeitungselement (206), das dazu ausgebildet ist, innerhalb eines voreingestellten Zeitraums, der von einem Timer spezifiziert wird, auf das BFD-Steuerpaket zu warten, das vom Dienstfunktionsknoten am gegenüberliegenden Ende gesendet wird; und
ein zweites Ausführungselement (208), das dazu ausgebildet ist, die BFD-Sitzung zu schließen und einen Dienstfunktionspfad-Umschaltvorgang durchzuführen, wenn das BFD-Steuerpaket nicht innerhalb des voreingestellten Zeitraums empfangen wird, und den Dienstfunktionsknoten am gegenüberliegenden Ende darüber zu informieren, dass ein Verbindungsfehler aufgetreten ist.

9. Vorrichtung nach Anspruch 6, wobei die Erkennungskomponente (20) umfasst:
ein Konfigurationselement (210), das dazu ausgebildet ist, die BFD-Sitzung zu schließen und das BFD-Steuerpaket zu konfigurieren im Falle des Bestimmens, dass die erste Dienstfunktionsinstanz in der Verwaltungsdomäne des Dienstfunktionsknotens am lokalen Ende ausgefallen ist oder geschlossen wurde, wobei ein aktueller lokaler Sitzungszustand, der in ein Statusfeld einer BFD im BFD-Steuerpaket eingetragen wird, auf einen geschlossenen Zustand eingestellt wird und eine Identifikationsnummer der zweiten Dienstfunktionsinstanz im BFD-Steuerpaket gekapselt wird; und
ein Sendeelement (212), das dazu ausgebildet ist, das BFD-Steuerpaket an den Dienstfunktionsknoten am gegenüberliegenden Ende zu senden.

10. Vorrichtung nach Anspruch 6, wobei die Einrichtungskomponente (10) umfasst:
ein Hinzufügeelement (100), das dazu ausgebildet ist, ein BFD-Funktionsmodul in die Verwaltungsdomäne des Dienstfunktionsknotens am lokalen Ende hinzuzufügen; und
ein Informationselement (102), das dazu ausgebildet ist, über den Dienstfunktionsknoten am lokalen Ende, an dem die erste Dienstfunktionsinstanz angesiedelt ist, das BFD-Funktionsmodul über BFD-Sitzungsaufbauinformationen zu informieren, wobei die BFD-Sitzungsaufbauinformationen zum Aufbauen der BFD-Sitzung durch das BFD-Funktionsmodul verwendet werden, und die BFD-Sitzungsaufbauinformationen mindestens eines umfassen aus einer Identifikationsnummer der ersten Dienstfunktionsinstanz, einer Identifikationsnummer der zweiten Dienstfunktionsinstanz, Identifikationsinformationen des Dienstfunktionsknotens am lokalen Ende, und Identifikationsinformationen des Dienstfunktionsknotens am gegenüberliegenden Ende.

## Revendications

1. Procédé de détection de défaut, comprenant :
la création d'une session de détection de transfert bidirectionnel (BFD) sur une voie de fonction de service établie entre une première instance de fonction de service dans un domaine de gestion d'un noeud de fonction de service d'extrémité locale et une deuxième instance de fonction de service dans un domaine de gestion d'un noeud de fonction de service d'extrémité opposée (S202) ; et
l'exécution d'une détection de défaut de connectivité par une interaction d'un paquet de commande de BFD entre le noeud de fonction de service d'extrémité locale et le noeud de fonction de service d'extrémité opposée (S204) ;
**caractérisé en ce que** l'exécution d'une détection de défaut de connectivité par l'interaction du paquet de commande de BFD (S204) comprend : la réception du paquet de commande de BFD du noeud de fonction de service d'extrémité opposée au cours d'une période de temps préréglée spécifiée par une minuterie, dans lequel le paquet de commande de BFD porte un numéro d'identification de la première instance de fonction de service ; et le maintien de la session de BFD dans un état ouvert et la réinitialisation de la minuterie dans le cas de la détermination que la première instance de fonction de service correspondant au numéro d'identification dans le domaine de gestion du noeud de fonction de service d'extrémité locale est dans un état actif.

2. Procédé selon la revendication 1, dans lequel, avant la détermination que la première instance de fonction de service est dans l'état actif, le procédé comprend en outre :
l'acquisition qu'un état de session actuelle locale renseigné dans un champ de statut d'une BFD dans le paquet de commande de BFD est actuellement l'état ouvert à partir du paquet de commande de BFD.

3. Procédé selon la revendication 1, dans lequel l'exécution d'une détection de défaut de connectivité par l'interaction du paquet de commande de BFD (S204) comprend :
l'attente du paquet de commande de BFD envoyé par le noeud de fonction de service d'extrémité opposée au cours d'une période de temps préréglée spécifiée par une minuterie ; et
la clôture de la session de BFD et l'exécution d'une opération de commutation de voie de fonction de service lorsque le paquet de commande de BFD n'est pas reçu au cours de la période de temps préréglée, et l'information du noeud de fonction de service d'extrémité opposée qu'un défaut de liaison survient.

4. Procédé selon la revendication 1, dans lequel l'exécution d'une détection de défaut de connectivité par l'interaction du paquet de commande de BFD (S204) comprend :
la clôture de la session de BFD et la configuration du paquet de commande de BFD dans le cas de la détermination que la première instance de fonction de service dans le domaine de gestion du noeud de fonction de service d'extrémité locale est défaillante ou a été close, dans lequel un état de session actuelle locale renseigné dans un champ de statut d'une BFD dans le paquet de commande de BFD est réglé pour être un état clos et un numéro d'identification de la deuxième instance de fonction de service est encapsulé dans le paquet de commande de BFD ; et
l'envoi du paquet de commande de BFD au noeud de fonction de service d'extrémité opposée.

5. Procédé selon la revendication 1, dans lequel la création de la session de BFD comprend :
l'ajout d'un module de fonction de BFD dans le domaine de gestion du noeud de fonction de service d'extrémité locale ; et
l'information, par le noeud de fonction de service d'extrémité locale où la première instance de fonction de service est située, du module de fonction de BFD, d'informations de création de session de BFD, dans lequel les informations de création de session de BFD sont utilisées pour la création, par le module de fonction de BFD, de la session de BFD, et les informations de création de session de BFD comprennent au moins l'un d'un numéro d'identification de la première instance de fonction de service, d'un numéro d'identification de la deuxième instance de fonction de service, d'informations d'identification du noeud de fonction de service d'extrémité locale, et d'informations d'identification du noeud de fonction de service d'extrémité opposée.

6. Dispositif de détection de défaut, comprenant :
un composant d'établissement (10) agencé pour la création d'une session de détection de transfert bidirectionnel (BFD) sur une voie de fonction de service établie entre une première instance de fonction de service dans un domaine de gestion d'un noeud de fonction de service d'extrémité locale et une deuxième instance de fonction de service dans un domaine de gestion d'un noeud de fonction de service d'extrémité opposée ; et
un composant de détection (20) agencé pour l'exécution d'une détection de défaut de connectivité par une interaction d'un paquet de commande de BFD entre le noeud de fonction de service d'extrémité locale et le noeud de fonction de service d'extrémité opposée ;
**caractérisé en ce que** le composant de détection comprend : un élément de réception agencé pour la réception du paquet de commande de BFD du noeud de fonction de service d'extrémité opposée au cours d'une période de temps préréglée spécifiée par une minuterie, dans lequel le paquet de commande de BFD porte un numéro d'identification de la première instance de fonction de service ; et un premier élément d'exécution agencé pour le maintien de la session de BFD dans un état ouvert et la réinitialisation de la minuterie dans le cas de la détermination que la première instance de fonction de service correspondant au numéro d'identification dans le domaine de gestion du noeud de fonction de service d'extrémité locale est dans un état actif.

7. Dispositif selon la revendication 6, dans lequel le composant de détection (20) comprend en outre :
un élément d'acquisition (204) agencé pour l'acquisition qu'un état de session actuelle locale renseigné dans un champ de statut d'une BFD dans le paquet de commande de BFD est actuellement l'état ouvert à partir du paquet de commande de BFD.

8. Dispositif selon la revendication 6, dans lequel le composant de détection (20) comprend :
un élément de traitement (206) agencé pour l'attente du paquet de commande de BFD envoyé par le noeud de fonction de service d'extrémité opposée au cours d'une période de temps préréglée spécifiée par une minuterie ; et
un deuxième élément d'exécution (208) agencé pour la clôture de la session de BFD et l'exécution d'une opération de commutation de voie de fonction de service lorsque le paquet de commande de BFD n'est pas reçu au cours de la période de temps préréglée, et l'information du noeud de fonction de service d'extrémité opposée qu'un défaut de liaison survient.

9. Dispositif selon la revendication 6, dans lequel le composant de détection (20) comprend :
un élément de configuration (210) agencé pour la clôture de la session de BFD et la configuration du paquet de commande de BFD dans le cas de la détermination que la première instance de fonction de service dans le domaine de gestion du noeud de fonction de service d'extrémité locale est défaillante ou a été close, dans lequel un état de session actuelle locale renseigné dans un champ de statut d'une BFD dans le paquet de commande de BFD est réglé pour être un état clos et un numéro d'identification de la deuxième instance de fonction de service est encapsulé dans le paquet de commande de BFD ; et
un élément d'envoi (212) agencé pour l'envoi du paquet de commande de BFD au noeud de fonction de service d'extrémité opposée.

10. Dispositif selon la revendication 6, dans lequel le composant d'établissement (10) comprend :
un élément d'ajout (100) agencé pour l'ajout d'un module de fonction de BFD dans le domaine de gestion du noeud de fonction de service d'extrémité locale ; et
un élément d'information (102) agencé pour l'information, par le noeud de fonction de service d'extrémité locale où la première instance de fonction de service est située, du module de fonction de BFD, d'informations de création de session de BFD, dans lequel les informations de création de session de BFD sont utilisées pour la création, par le module de fonction de BFD, de la session de BFD, et les informations de création de session de BFD comprennent au moins l'un d'un numéro d'identification de la première instance de fonction de service, d'un numéro d'identification de la deuxième instance de fonction de service, d'informations d'identification du noeud de fonction de service d'extrémité locale, et d'informations d'identification du noeud de fonction de service d'extrémité opposée.
